# EUROPÄISCHE PATENTANMELDUNG

(11) **EP 4 578 767 A1**
(43) Veröffentlichungstag der Anmeldung: **02.07.2025**
(21) Anmeldenummer: 24223776.6
(22) Anmeldetag: 30.12.2024
(51) Int. Cl.: B62D 35/00, B62D 37/02

(54) **LUFTLEITVORRICHTUNG FÜR EIN FAHRZEUG**

(30) Priorität: 31.12.2023 DE 102023136908
(71) Anmelder: Valmet Automotive Oy, 23500 Uusikaupunki (FI)
(72) Erfinder: Kreiling, Nils, 49080 Osnabrück (DE)
(74) Vertreter: Kronthaler, Schmidt & Coll.

(57) **Zusammenfassung**

Es wird eine Luftleitvorrichtung (5) für ein Fahrzeug (1) vorgeschlagen, mit wenigstens einer Luftleitfläche (6), welche über eine Aufstellmechanik (13) zwischen einer eingefahrenen Ruhestellung und einer zumindest teilweise ausgefahrenen Gebrauchsstellung verstellbar ist und welche mit einer Tragstruktur (7) verbunden ist. Die Tragstruktur (7) weist wenigstens eine wannenartige Ausformung (9, 10) auf, in der eine Gelenkanordnung (14, 15) der Aufstellmechanik (13) wenigstens in der Ruhestellung zumindest teilweise aufgenommen ist. Die wannenartige Ausformung (9, 10) weist wenigstens eine Wasserabführöffnung (26) auf, an die ein Wasserabführkanal (27) angeschlossen ist, in dem die Gelenkanordnung (14, 15) zumindest in der Ruhestellung teilweise aufgenommen ist. Weiterhin wird ein Fahrzeug (1) mit einer solchen Luftleitvorrichtung (5) vorgeschlagen.

## Beschreibung

Die erfindungsgemäße Technologie betrifft eine Luftleitvorrichtung für ein Fahrzeug nach der im Oberbegriff des Patentanspruches 1 näher definierten Art.

Aus der DE 103 09 369 A1 ist ein Kraftfahrzeug mit zumindest einer mittels eines Antriebs ausfahrbaren Heck-Luftleiteinrichtung bekannt, wobei die Luftleiteinrichtung mit einer Luftleitfläche, die über eine Aufstellmechanik mit zwei an der Fahrzeugkarosserie drehfest gelagerten Gelenkanordnungen, welche jeweils mehrere Schwenklenker umfassen, verstellbar ist. Die Aufstellmechanik ist mit einer Tragstruktur verbunden, welche eine sich in Fahrzeugbreite erstreckende Tragplatte aufweist. Von der Tragplatte erstrecken sich schalenartige Ausbuchtungen in Fahrzeugbodenrichtung, wobei in jeweils einer schalen- bzw. wannenartigen Ausbuchtung ein Teil der zugeordneten Gelenkanordnung der Aufstellmechanik aufgenommen ist. Da die Tragstruktur einen zur Fahrzeugumgebung offenen Nassbereich von einem im Inneren der Fahrzeugkarosserie liegenden Trockenbereich trennt, ist zur Abführung von eindringendem Regenwasser am Bodenbereich der jeweiligen wannenartigen Ausbuchtung eine Wasserabführöffnung angeordnet. An diese Wasserabführöffnung ist eine Rohrleitung angeschlossen, welche das in den Bereich der Luftleiteinrichtung eingedrungene Wasser gezielt an der Karosserie nach außen abführt.

Es ist Aufgabe der erfindungsgemäßen Technologie, zumindest einen Nachteil von einer vorbekannten Lösung zu verringern oder zu beheben oder eine alternative Lösung vorzuschlagen. Es ist insbesondere Aufgabe der hier offenbarten Technologie, eine Luftleitvorrichtung für ein Fahrzeug zur Verfügung zu stellen, die hinsichtlich mindestens einer der folgenden Faktoren verbessert ist: Herstellungskosten, Komplexität der Herstellung, Montageaufwand, Bauraumausnutzung, Betriebssicherheit, Funktionalität, Nachhaltigkeit, Bauteilzuverlässigkeit und optisches Erscheinungsbild.

Die Aufgabe wird gelöst mit einer Luftleitvorrichtung für ein Fahrzeug mit den Merkmalen des Patentanspruches 1. Die abhängigen Patentansprüche stellen bevorzugte Ausgestaltungen dar.

Ein weiterer Aspekt der Erfindung betrifft ein Fahrzeug mit einer derartigen Luftleitvorrichtung.

Es wird mithin eine Luftleitvorrichtung für ein Fahrzeug vorgeschlagen, mit wenigstens einer Luftleitfläche, welche über eine Aufstellmechanik zwischen einer eingefahrenen Ruhestellung und einer zumindest teilweise ausgefahrenen Gebrauchsstellung verstellbar ist und welche mit einer Tragstruktur verbunden ist. Die Tragstruktur weist wenigstens eine wannenartige Ausformung auf, in der eine Gelenkanordnung der Aufstellmechanik wenigstens in der Ruhestellung zumindest teilweise aufgenommen ist. Die wannenartige Ausformung weist wenigstens eine Wasserabführöffnung auf.

Erfindungsgemäß ist an die Wasserabführöffnung ein Wasserabführkanal angeschlossen, in dem die Gelenkanordnung zumindest in der Ruhestellung teilweise, vorzugsweise mit wenigstens einer Gelenkverbindung, aufgenommen ist.

Mit anderen Worten umgreift der Wasserabführkanal einen Teil der Kinematik, welche sich somit bis unterhalb eines Bodens der wannenartigen Ausformung erstreckt.

Mit der erfindungsgemäßen Luftleitvorrichtung kann die erforderliche Bauhöhe der wannenartigen Ausformung deutlich reduziert werden. Dies hat wiederum fertigungstechnische Vorteile, da eine geringere Höhe der wannenartigen Ausformung z. B. kostengünstige Tiefziehverfahren erlaubt, die bei den Bautiefen der wannenartigen Ausformungen bekannter Spoiler an ihre Grenzen stoßen.

Bei einer Ausführung der erfindungsgemäßen Luftleitvorrichtung kann die Tragstruktur eine Trägerplatte aufweisen, welche zumindest eine Ausnehmung aufweist, in deren Bereich die wenigstens eine wannenartige Ausformung sich in Fahrzeugbodenrichtung erstreckend angeordnet ist. Dabei ist der Begriff "Fahrzeugbodenrichtung" in seinem weiteren Sinne so zu verstehen, dass sich die wannenartige Ausformung auch schräg in Fahrzeugbodenrichtung erstrecken kann, wobei sich eindringendes Wasser in Richtung Fahrzeugboden darin sammelt.

Unter dem Begriff "Trägerplatte" kann eine geschlossene Platte ebenso verstanden werden wie eine ebene Struktur mit Ausnehmungen bis hin zu einer ebenen Gitterstruktur. In jedem Fall ist die Trägerplatte gegenüber der jeweiligen wannenarten Ausnehmung geöffnet, so dass die wannenartige Ausnehmung wie eine Unterschale hieran angeordnet ist.

Die Trägerplatte und die wenigstens eine wannenartige Ausformung können einteilig ausgebildet sein. Dies vermeidet die Anordnung einer Verbindungseinrichtung und Dichtung zwischen der Trägerplatte und der wannenarten Ausnehmung und kann die Fertigung vergünstigen.

Prinzipiell sind je nach gewähltem Material unterschiedlichste Fertigungsarten möglich. Beispielsweise können im Hinblick auf Steifigkeit und Montage an der umgebenden Karosserie Metallwerkstoffe eingesetzt werden, für die z. B. Gießverfahren und Tiefziehverfahren in Betracht kommen.

Eine besonders kostengünstige Fertigung ist bei einer Ausbildung der Trägerplatte und der wenigstens einen wannenartigen Ausformung als Blechbauteil möglich, wobei die geringe erforderliche Bautiefe eines einteiligen Zusammenbauteils aus Trägerplatte und wenigstens einer wannenartigen Ausformung die Herstellung als gezogenes Blechbauteil erlaubt.

Der Wasserabführkanal kann als kostengünstiges Kunststoffbauteil ausgebildet sein.

Bei einer vorteilhaften Ausführung kann der Wasserabführkanal einen an der wannenartigen Ausformung gedichtet befestigbaren Ablauftrichter umfassen, in dem die Gelenkanordnung zumindest in der Ruhestellung mit wenigstens einer Gelenkverbindung teilweise aufgenommen ist. Die sich typischerweise verjüngende Form eines Ablauftrichters bietet in seinem der wannenartigen Ausformung zugewandten Bereich ausreichend Platz für die Aufnahme eines Teils der Kinematik der Aufstellmechanik und verschlankt sich gegenüber einem Bodenbereich, in dem der Ablauftrichter wenigstens einen Leitungsanschluss für eine Wasserabführleitung aufweisen kann.

Die z. B. an die Fahrzeugkarosserie angebundene Wasserabführleitung kann dabei ein flexibler Schlauch oder ein starres Rohr sein, über das Wasser gezielt nach außen abführbar ist.

Bei dem üblichen Gewicht eines Spoilers und dem auf die Luftleitvorrichtung im Betrieb einwirkenden Druck ist es zweckmäßig, wenn an der Tragstruktur zwei vorzugsweise zur Fahrzeugmittelebene symmetrisch angeordnete Gelenkanordnungen befestigt sind, denen jeweils eine wannenartige Ausformung mit einem Wasserabführkanal zugeordnet ist.

Wenngleich prinzipiell eine Anordnung an unterschiedlichen Stellen eines Fahrzeugs denkbar sind, entfaltet die vorgeschlagene Luftleitvorrichtung ihre Vorteile insbesondere bei einer Ausgestaltung als Heck-Luftleitvorrichtung zur Verbauung an einem Heckbereich des Fahrzeugs, insbesondere unterhalb einer Heckscheibe.

Die Erfindung ist nicht auf die angegebene Kombination der Merkmale der unabhängigen Ansprüche oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung von Ausführungsformen oder unmittelbar aus der Zeichnung hervorgehen, miteinander im Rahmen der Ansprüche zu kombinieren. Die Bezugnahme der Ansprüche auf die Zeichnung durch Verwendung von Bezugszeichen soll den Schutzumfang der Ansprüche nicht beschränken.

Die hier offenbarte Technologie wird nun anhand der Figuren der Zeichnung näher erläutert.

Es zeigt:
Fig. 1 eine perspektivische Teilansicht eines Fahrzeugs mit einer am Fahrzeugheck angeordneten Luftleitvorrichtung in einem Zustand mit ausgefahrener Luftleitfläche;
Fig. 2 eine vereinfachte dreidimensionale Alleindarstellung der Luftleitvorrichtung gemäß Fig. 1;
Fig. 3 eine vereinfachte Seitendarstellung der Luftleitvorrichtung der Fig. 1 und Fig. 2; und
Fig. 4 eine dreidimensionale Detaildarstellung einer Wasserableitung der Luftleitvorrichtung der Fig. 1 bis Fig. 3.

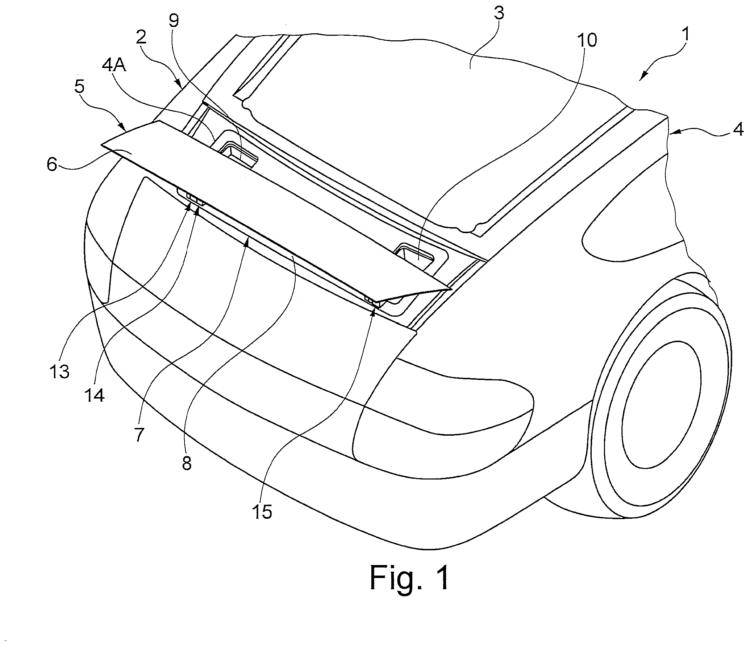

Bezug nehmend auf Fig. 1 ist ein Kraftfahrzeug 1 dargestellt, das in seinem Heckbereich 2 unterhalb einer Heckscheibe 3 eine an einer Fahrzeugkarosserie 4 angebundene Luftleitvorrichtung 5 aufweist, die vorliegend eine einzige bewegliche Luftleitfläche 6, auch als Spoiler oder Spoilerblatt bezeichnet, umfasst.

Das Fahrzeug 1 kann sowohl ein geschlossenes als auch ein Targa- oder Cabrioletfahrzeug sein.

Die Luftleitvorrichtung 5 ist insgesamt als Modul ausgebildet und umfasst eine in einen Ausschnitt 4A der Karosserie 4 z. B. über Schrauben befestigbare Tragstruktur 7, welche vorliegend mit einer Tragplatte 8 ausgebildet ist, die planar betrachtet zwei Ausnehmungen 8A, 8B aufweist, in deren Bereich sich in Fahrzeugbodenrichtung wannenartige Ausformungen 9, 10 erstrecken. An der Tragstruktur 7 sind vorliegend alle beweglichen Teile der Luftleitvorrichtung 5 abgestützt.

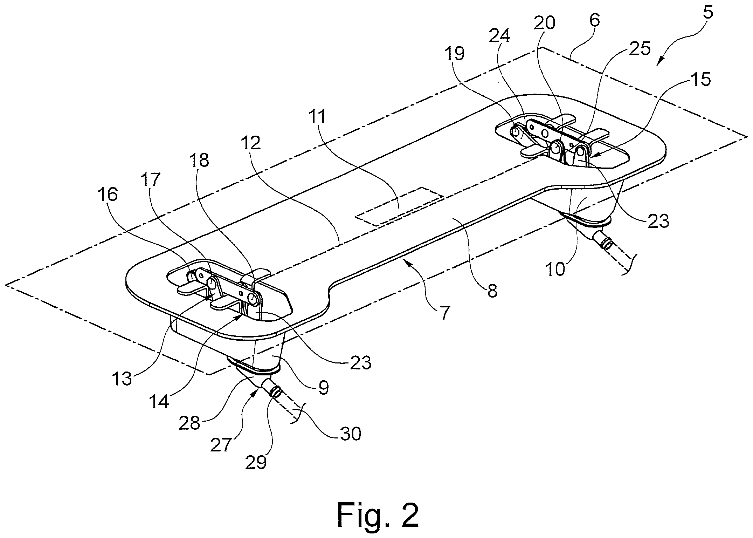

Wie in der Fig. 2 symbolisch mit strichlierten Linien angedeutet ist, ist an der Tragstruktur 7 ein Antrieb 11, etwa ein Hydraulik- oder Elektroantrieb, angeordnet, der auf eine rotierbare Antriebswelle 12 einwirken kann, die sich quer zum Fahrzeug 1 erstreckt und eine Aufstellmechanik 13 für die Luftleitfläche 6 betätigt.

Je nach Breite der Luftleitfläche 6 und ggf. Anzahl an Luftleitflächen kann die Aufstellmechanik 13 über die Fahrzeugbreite eine oder mehrere bewegliche Gelenkanordnungen 14, 15 enthalten, die die Luftleitfläche 6 tragen und bewegen. Im gezeigten Ausführungsbeispiel sind symmetrisch zu einer vertikalen Fahrzeuglängsmittelebene als Bewegungseinheiten zwei gleichartige Gelenkanordnungen 14, 15 vorgesehen, weshalb deren baugleiche Bauelemente der Übersichtlichkeit wegen nachfolgend mit gleichen Bezugszeichen bezeichnet sind. Über diese Gelenkanordnungen 14, 15 ist die Luftleitfläche 6 zwischen einer Ruheposition, in der die Luftleitfläche 6 bündig in einer Außenhaut der Karosserie 4 gelegen ist, und der in Fig. 1 gezeigten aufgestellten Position, in der die Luftleitfläche bzw. das Spoilerblatt 6 hier heckwärts verlagert und nach hinten ansteigend gehalten ist, verlagerbar.

Die Betätigung dieser Verlagerung kann automatisch, etwa bei Erreichen einer Grenzgeschwindigkeit, und zusätzlich oder alternativ vom Fahrzeuginneren aus fernsteuerbar sein. Zwischenstellungen zwischen einer maximal ausgefahrenen und einer vollständig eingefahrenen Stellung sind grundsätzlich möglich.

Die Gelenkanordnungen 14, 15 sind dabei selbst vormontierbar und als Ganzes jeweils in einer der wannenartigen Ausformungen 9, 10 der Tragstruktur 7 z. B. über Schrauben und Flansche abgestützt. Die Antriebswelle 12 durchgreift jeweils eine Wandung der wannenartigen Ausformungen 9, 10, um auf die Gelenkanordnungen 14, 15 einwirken zu können.

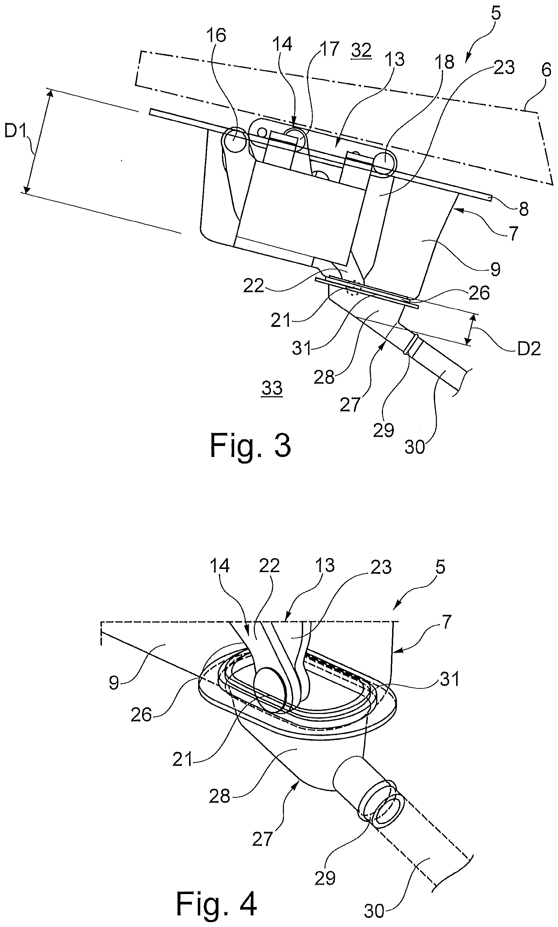

Die Gelenkanordnungen 14, 15 der Aufstellmechanik 13 umfassen jeweils mehrere über teilweise gegenüber der Karosserie 4 abgestützte Gelenkverbindungen 16, 17, 18, 19, 20, 21 verbundene Lenker 22, 23, 24, 25, von denen nur einige in den Figuren exemplarisch dargestellt und von denen die am weitesten in Fahrzeugbodenrichtung weisenden Lenker 22, 23 mit ihrem Gelenkpunkt 21 in Fig. 3 und Fig. 4 näher gezeigt sind.

Je nach Anwendungsfall können die Gelenkanordnungen 14, 15 z. B. Zweischläge, 4-Gelenkanordnungen, 7-Gelenkanordnungen oder andere geeignete Lenkeranordnungen umfassen, um die Gelenkanordnungen 14, 15 zu öffnen oder zu schließen und damit das Spoilerblatt 6 aus- oder einzufahren und ggf. in einer ausgefahrenen Position zu verstellen.

Eine Luftleitvorrichtung im Heckbereich 2 z. B. bei einer Heckklappe des Fahrzeugs 1 trennt grundsätzlich einen Außenbereich bzw. Nassbereich 32 von einem unterhalb der Karosserieaußenhaut liegenden Trockenbereich 33, weshalb eine Art Wasserfangschale und eine Wasserableitung aus dem Karosseriebereich erforderlich ist. Die wannenartigen Ausformungen 9, 10 erfüllen hier die Funktion einer Wasserauffangvorrichtung.

Um das in die Luftleitvorrichtung 5 eingedrungene und aufgefangene Wasser ohne Korrosionsgefahr gezielt ableiten zu können, weist die wannenartige Ausformung eine Wasserabführöffnung 26 auf, an die ein Wasserabführkanal 27 angeschlossen ist. Dabei ist der Wasserabführkanal 27 im Bereich seines gedichteten Anschlusses 31 an die wannenartige Ausformung 9 bzw. 10 so dimensioniert, dass dieser einen Teil der Gelenkanordnung 14 bzw. 15 zumindest in der Ruhestellung umgreift. Vorliegend ist dabei die am weitestgehend in Fahrzeugbodenrichtung weisende Gelenkverbindung 23 zwischen den Lenkern 22 und 23 im Bereich des Wasserabführkanals 27 angeordnet.

Die Trägerplatte 8 und die wannenartigen Ausformungen 9, 10 sind hier kostengünstig einteilig als gezogenes Blechbauteil ausgebildet, da die erforderliche nutzbare Bautiefe D1 in den wannenartigen Ausformungen 9, 10 eine technisch einfach zu realisierende Ziehtiefe ist.

Der über einen üblichen Flansch am Anschluss 31 dichtend angebundene Wasserabführkanal 27 ist kostengünstig beispielsweise mittels Spritzguss aus Kunststoff gebildet, insbesondere aus hochtemperaturbeständigem Kunststoff.

Der Wasserabführkanal 27 ist vorliegend mehrteilig ausgeführt, wobei am Anschluss 31 an die Wasserabführöffnung 26 ein Ablauftrichter 28 angeordnet ist, der einen weiteren nutzbaren Bauraum und eine Bautiefe D2 für die Gelenkanordnungen 14, 15 bereitstellt und vorliegend die Gelenkverbindung 23 zwischen den Lenkern 22 und 23 umgreift. Somit ermöglicht der Ablauftrichter 28 eine Bauhöhenreduzierung des Zusammenbauteils aus Trägerplatte 8 und wannenartigen Ausformungen 9, 10.

Der Ablauftrichter 28 ist sich in Richtung eines Leitungsanschlusses 29 für eine Wasserabführleitung 30 verjüngend ausgebildet, wobei der Leitungsanschluss 29 ein herkömmlicher Schlauchstutzen sein kann und die Wasserabführleitung 30 ein Schlauch und/oder ein Rohr aus Kunstsoff darstellen kann.

Die gezeigte Ausführung aus Kunststoff ermöglicht eine nahezu frei wählbare Formgebung des Ablauftrichters 28 und der Wasserabführleitung 30, wodurch ein Wassereindrang optimal an die Formgebung der Karosserie 4 angepasst kanalisiert und definiert abgeleitet werden kann. Gleichzeitig hat die als Modul verbaubare Luftleitvorrichtung 5 insgesamt nur ein geringes Gewicht.

### BEZUGSZEICHENLISTE

- 1: Fahrzeug
- 2: Heckbereich
- 3: Heckscheibe
- 4: Fahrzeugkarosserie
- 4A: Ausschnitt
- 5: Luftleitvorrichtung
- 6: Luftleitfläche
- 7: Tragstruktur
- 8: Tragplatte
- 8A: Ausnehmung
- 8B: Ausnehmung
- 9: wannenartige Ausformung
- 10: wannenartige Ausformung
- 11: Antrieb
- 12: Antriebswelle
- 13: Aufstellmechanik
- 14: Gelenkanordnung
- 15: Gelenkanordnung
- 16: Gelenkverbindung
- 17: Gelenkverbindung
- 18: Gelenkverbindung
- 19: Gelenkverbindung
- 20: Gelenkverbindung
- 21: Gelenkverbindung
- 22: Lenker
- 23: Lenker
- 24: Lenker
- 25: Lenker
- 26: Wasserabführöffnung
- 27: Wasserabführkanal
- 28: Ablauftrichter
- 29: Leitungsanschluss
- 30: Wasserabführleitung
- 31: Anschluss
- 32: Außenbereich, Nassbereich
- 33: Trockenbereich
- D1: nutzbare Bautiefe
- D2: nutzbare Bautiefe

## Patentansprüche

1. Luftleitvorrichtung für ein Fahrzeug (1) mit wenigstens einer Luftleitfläche (6), welche über eine Aufstellmechanik (13) zwischen einer eingefahrenen Ruhestellung und einer zumindest teilweise ausgefahrenen Gebrauchsstellung verstellbar ist und welche mit einer Tragstruktur (7) verbunden ist,
wobei die Tragstruktur (7) wenigstens eine wannenartige Ausformung (9, 10) aufweist, in der eine Gelenkanordnung (14, 15) der Aufstellmechanik (13) wenigstens in der Ruhestellung zumindest teilweise aufgenommen ist,
und wobei die wannenartige Ausformung (9, 10) wenigstens eine Wasserabführöffnung (26) aufweist,
**dadurch gekennzeichnet, dass** an die Wasserabführöffnung (26) ein Wasserabführkanal (27) angeschlossen ist, in dem die Gelenkanordnung (14, 15) zumindest in der Ruhestellung teilweise aufgenommen ist.

2. Luftleitvorrichtung nach Anspruch 1,
**dadurch gekennzeichnet, dass** wenigstens eine Gelenkverbindung (23) der Gelenkanordnung (14, 15) in dem Wasserabführkanal (27) aufgenommen ist.

3. Luftleitvorrichtung nach Anspruch 1 oder 2,
**dadurch gekennzeichnet, dass** die Tragstruktur (7) eine Trägerplatte (8) aufweist, welche zumindest eine Ausnehmung (8A, 8B) aufweist, in deren Bereich die wenigstens eine wannenartige Ausformung (9, 10) sich in Einbaulage in Fahrzeugbodenrichtung erstreckend angeordnet ist.

4. Luftleitvorrichtung nach Anspruch 3,
**dadurch gekennzeichnet, dass** die Trägerplatte (8) und die wenigstens eine wannenartige Ausformung (9, 10) einteilig ausgebildet sind.

5. Luftleitvorrichtung nach Anspruch 4,
**dadurch gekennzeichnet, dass** die Trägerplatte (8) und die wenigstens eine wannenartige Ausformung (9, 10) ein, insbesondere gezogenes, Blechbauteil darstellen.

6. Luftleitvorrichtung nach einem der Ansprüche 1 bis 5,
**dadurch gekennzeichnet, dass** der Wasserabführkanal (27) aus Kunststoff gebildet ist.

7. Luftleitvorrichtung nach einem der Ansprüche 1 bis 6,
**dadurch gekennzeichnet, dass** der Wasserabführkanal (27) einen an der wannenartigen Ausformung (9, 10) gedichtet befestigbaren Ablauftrichter (28) umfasst, in dem die Gelenkanordnung (14, 15) zumindest in der Ruhestellung mit wenigstens einer Gelenkverbindung (23) teilweise aufgenommen ist,

8. Luftleitvorrichtung nach Anspruch 7,
**dadurch gekennzeichnet, dass** der Ablauftrichter (28) wenigstens einen Leitungsanschluss (29) für eine Wasserabführleitung (30) aufweist.

9. Luftleitvorrichtung nach einem der Ansprüche 1 bis 8,
**dadurch gekennzeichnet, dass** an der Tragstruktur (7) zwei symmetrisch hieran angeordnete Gelenkanordnungen (14, 15) befestigt sind, denen jeweils eine wannenartige Ausformung (9, 10) mit einem Wasserabführkanal (27) zugeordnet ist.

10. Luftleitvorrichtung nach einem der Ansprüche 1 bis 9,
**dadurch gekennzeichnet, dass** diese als eine Heck-Luftleitvorrichtung zur Verbauung an einem Heckbereich (2) des Fahrzeugs (1) ausgebildet ist.

11. Fahrzeug (1) mit einer heckseitig angeordneten Luftleitvorrichtung (5) gemäß einem der Ansprüche 1 bis 10.
